(19) Europäisches Patentamt
European Patent Office
Office européen des brevets

(11) Publication number : **0 435 253 B1**

(12) # EUROPEAN PATENT SPECIFICATION

(45) Date of publication of patent specification : **09.03.94 Bulletin 94/10**

(21) Application number : **90125500.0**

(22) Date of filing : **27.12.90**

(51) Int. Cl.$^5$ : **C10M 105/36,** C10M 105/38, C10M 105/42, C10M 111/04, C10M 169/04, C09K 5/04, // (C10M111/04, 105:36, 105:38, 105:42, 107:34), (C10M169/04, 105:36, 105:38, 105:42, 107:34, 129:18, 137:02), C10N40:30

(54) **Refrigerator oils for use with hydrogen-containing halogenocarbon refrigerants.**

The file contains technical information submitted after the application was filed and not included in this specification

(30) Priority : **28.12.89 JP 341244/89**
**28.12.89 JP 341245/89**
**20.04.90 JP 105772/90**
**14.05.90 JP 121133/90**

(43) Date of publication of application : **03.07.91 Bulletin 91/27**

(45) Publication of the grant of the patent : **09.03.94 Bulletin 94/10**

(84) Designated Contracting States : **DE DK GB IT**

(56) References cited :
**WO-A-90/12849**
**GB-A- 2 216 541**
**US-A- 2 807 155**
**US-A- 4 851 144**
**US-A- 4 948 525**
**DATABASE WPIL, accession no. 87-041021 [06], Derwent Publications Ltd, London, GB; & JP-A-62 000 592 (NIPPON OILS) 06-01-1987**
**DATABASE WPIL, accession no. 84-267230 [43], Derwent Publications Ltd, London, GB; & JP-A-59 164 393 (NIPPON OILS) 17-09-1984**

(56) References cited :
**DATABASE WPIL, accession no. 81-08816D [06], Derwent Publications Ltd, London, GB; & JP-A-55 155 093 (NIPPON OILS) 04-12-1980**
**DATABASE WPIL, accession no. 88-033105 [05], Derwent Publications Ltd, London, GB; & JP-A-62 292 895 (NIPPON OIL) 19-12-1987**

(73) Proprietor : **NIPPON OIL CO., LTD.**
**3-12, 1-chome, Nishi-shimbashi Minato-ku**
**Tokyo (JP)**

(72) Inventor : **Hasegawa, Hiroshi, c/o Nippon Oil Co. Ltd.**
**Central Technical Research Lab., 8, Chidori-cho**
**Naka-ku, Yokohama-shi, Kanagawa-ken (JP)**
Inventor : **Ishida, Noboru, c/o Nippon Oil Co. Ltd.**
**Central Technical Research Lab., 8, Chidori-cho**
**Naka-ku, Yokohama-shi, Kanagawa-ken (JP)**
Inventor : **Sasaki, Umekichi, c/o Nippon Oil Co. Ltd.**
**Central Technical Research Lab., 8, Chidori-cho**
**Naka-ku, Yokohama-shi, Kanagawa-ken (JP)**
Inventor : **Ishikawa, Tatsuyuki, c/o Nippon Oil Co. Ltd.**
**Central Technical Research Lab., 8, Chidori-cho**
**Naka-ku, Yokohama-shi, Kanagawa-ken (JP)**

(74) Representative : **Kraus, Walter, Dr. et al**
**Patentanwälte Kraus, Weisert & Partner**
**Thomas-Wimmer-Ring 15**
**D-80539 München (DE)**

**EP 0 435 253 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a lubricating oil for compressors of refrigerators using therein a hydrogen-containing halogenocarbon as a refrigerant (the oil being hereinafter referred to as "a refrigerator oil for use with a hydrogen-containing halogenocarbon refrigerant") and, more specifically, it relates to such a refrigerator oil which comprises a specific ester as a base oil and is superior in various properties.

Generally, naphthenic mineral oils, paraffinic mineral oils, alkylbenzenes, polyglycolic oils, ester oils and mixtures thereof, which have each a kinematic viscosity of 10 - 200 cSt at 40°C, as well as said oils incorporated with suitable additives have been used as refrigerator oils.

On the other hand, chlorofluorocarbons (CFCS) type refrigerants, such as CFC-11, CFC-12, CFC-113 and HCFC-22, have been used for refrigerators.

Of these CFCS, CFCS such as CFC-11, CFC-12 and CFC-113, which are obtained by substituting all the hydrogen atoms of hydrocarbons thereof by halogen atoms including chlorine atoms, may lead to the destruction of the ozone layer, and therefore, the use of the CFCS has been controlled. Accordingly, hydrogen-containing halogenocarbons, such as HFC-134a and HFC-152a, have been being used as substitutes for CFCs. HFC-134a is especially hopeful as a substitute refrigerant since it is similar in thermodynamic properties to CFC-12 which has heretofore been used in many kinds of refrigerators of home cold-storage chests, air-conditioners and the like.

Refrigerator oils require various properties, among which their compatibility with refrigerants is extremely important in regard to lubricity and system efficiency in refrigerators. However, conventional refrigerator oils comprising, as the base oils, naphthenic oils, paraffinic oils, alkylbenzenes, heretofore known ester oils and the like, are hardly compatible with hydrogen-containing halogenocarbons such as HFC-134a. Therefore, if said conventional refrigerator oils are used in combination with HFC-134a, the resulting mixture will separate into two layers at normal temperature thereby to degrade the oil-returnability which is the most important within the refrigeration system and cause various troubles such as a decrease in refrigeration efficiency, the deterioration of lubricity and the consequent seizure of the compressor within the system whereby the refrigerator oils are made unsuitable for use as such. In addition, polyglycolic oils are also known as refrigerator oils for their high viscosity index and are disclosed in, for example, JP-A-57-42119 and JP-A-61-52880 and JP-A-57-51795. However, the polyglycolic oils concretely disclosed in these prior art publications are not fully compatible with HFC-134a thereby raising the same problems as above and rendering them unusable.

Further, US-A-4,755,316 discloses polyglycolic refrigerator oils which are compatible with HFC-134a and US-A-4,851,144 discloses refrigerator oils comprising a mixture of an ester and a polyglycol which are compatible with HFC-134a. In addition, the present inventors developed polyglycolic refrigerator oils which have excellent compatibility with HFC-134a as compared with conventional known refrigerator oils, filed an application for a patent for the thus developed polyglycolic refrigerator oils and have already obtained a patent (US-A-4,948,525) therefor. It has been found, however, that the polyglycolic oils raise problems as to their high compatibility with water and inferior electrical insulating property.

On the other hand, refrigerator oils used in compressors of home refrigerators and the like are required to have a high electrical insulating property. Among the known refrigerator oils, alkylbenzenes and the mineral oils have the highest insulating property, but they are hardly compatible with hydrogen-containing halogenocarbons such as HFC-134a as mentioned above. WO 90/12849 describes a composition comprising a hydrogen-containing halogenocarbon and a specific ester lubricant. Therefore, there had been developed no refrigerator oils having both high compatibility with hydrogen-containing halogenocarbons such as HFC-134a and a high insulating property before the accomplishment of the present invention.

The present inventors made various intensive studies in attempts to develop refrigerator oils which can meet the aforesaid requirements and, as the result of their studies, they found that esters having specific structures have excellent compatibility with hydrogen-containing halogenocarbons such as HFC-134a, and a high electrical insulating property as well as excellent lubricity. This invention is based on this finding.

The object of this invention is to provide refrigerator oils for use with hydrogen-containing halogenocarbons refrigerants, the oils comprising as a major component (or a base oil) at least one kind of ester having a specific structure and having excellent compatibility with hydrogen-containing halogenocarbons such as HFC-134a, and a high electrical insulating property.

The present invention provides a refrigerator oil for use in compressors using therein a hydrogen-containing halogenocarbon as a refrigerant, consisting essentially of as a base oil at least one kind of an ester selected from the group consisting of:

[I] a pentaerythritol ester represented by the general formula (1)

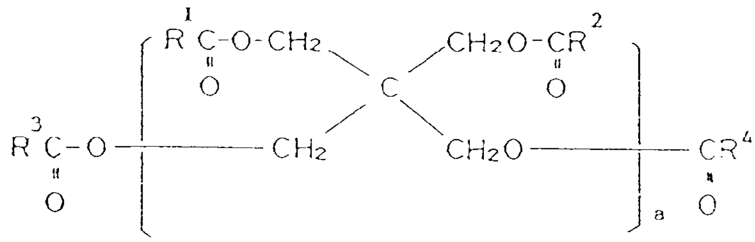

(1)

wherein $R^1$-$R^4$ may be identical with or different from each other and are each a group selected from the group consisting of straight-chain alkyl groups having 3 to 11 carbon atoms, branched-chain alkyl groups having 3 to 15 carbon atoms and cycloalkyl groups having 6 to 12 carbon atoms, the straight-chain alkyl groups being present in a ratio of not more than 60% of the total alkyl groups, and a is an integer of 1 to 3;

[II] a polyol ester represented by the general formula (2)

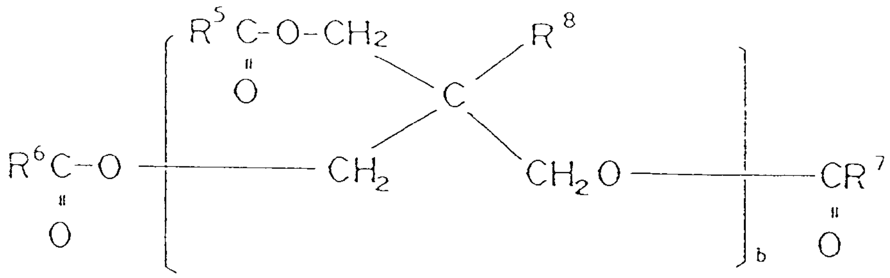

(2)

wherein $R^5$-$R^7$ may be identical with or different from each other and are each a group selected from the group consisting of straight-chain alkyl groups having 3 to 11 carbon atoms, branched-chain alkyl groups having 3 to 15 carbon atoms and cycloalkyl groups having 6 to 12 carbon atoms, the straight-chain alkyl groups being present in a ratio of not more than 60% of the total alkyl groups, $R^8$ is a group selected from the group consisting of methyl, ethyl and propyl groups, and b is an integer of 1 to 3;

[III] an ester represented by the general formula (3)

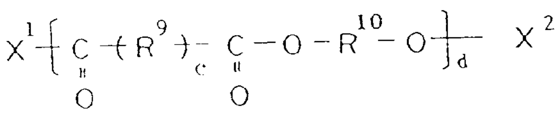

(3)

wherein $X^1$ is a group represented by the general formula $-OR^{11}$ or

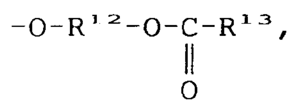

$X^2$ is a group represented by the general formula

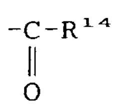 or 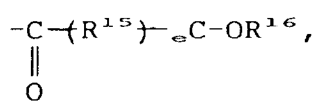

$R^9$ and $R^{15}$ are each a divalent hydrocarbon group having 1 to 8 carbon atoms, $R^{10}$ and $R^{12}$ are each a divalent saturated hydrocarbon group having 2 to 16 carbon atoms, $R^{11}$ and $R^{16}$ are each a branched-chain alkyl group having 3 to 15 carbon atoms, $R^{13}$ and $R^{14}$ are each a branched-chain alkyl group having 3 to 14 carbon atoms, c and e are each an integer of 0 or 1 and d is an integer of 0 to 30; and

[IV] a polyol ester obtained by the synthesis of, as raw materials, (a) a neopentyl type polyhydric alcohol having 5 to 6 carbon atoms and 3 to 4 hydroxyl groups, (b) a straight-chain monocarboxylic acid and/or a branched-chain monocarboxylic acid, the branched-chain monocarboxylic acid being present in a ratio of not less than 50 mol% of the total monocarboxylic acids, (c) a dicarboxylic acid; and further comprising at least one kind of an epoxy compound selected from the group consisting of phenylglycidyl ether type epoxy compounds, glycidyl ester type epoxy compounds, epoxidized fatty acid monoesters and epoxidized vegetable oils, in an amount of 0.1 to 5.0% by weight based on the total amount of the refrigerator oil.

First, the pentaerythritol esters [I] will be explained in detail. In the formula (1), $R^1$-$R^4$ may be identical with, or different from, each other and are each a group selected from the group consisting of straight-chain alkyl groups having 3-11 carbon atoms, preferably 3-7 carbon atoms, branched-chain alkyl groups having 3-15 carbon atoms, preferably 4-11 carbon atoms and cycloalkyl groups having 6-12 carbon atoms, preferably 6-8 carbon atoms. The cycloalkyl groups in this invention may include alkylcycloalkyl groups. In addition, a ratio of the straight-chain alkyl groups to the total alkyl groups is not more than 60%, preferably not more than 50%. Further, a is an integer of 1-3. Thus, the formula(1) illustrates monopentaerythritol esters, dipentaerythritol esters and tripentaerythritol esters.

$R^1$-$R^4$ are each exemplified by n-propyl group, n-butyl group, n-pentyl group, n-hexyl group, n-heptyl group, n-octyl group, n-nonyl group, n-decyl group, n-undecyl group, iso-propyl group, iso-butyl group, iso-pentyl group, iso-hexyl group, iso-heptyl group, iso-octyl group, iso-nonyl group, iso-decyl group, iso-undecyl group, iso-dodecyl group, iso-tridecyl group, iso-tetradecyl group, iso-pentadecyl group, cyclohexyl group, cycloheptyl group, cyclooctyl group, cyclononyl group, cyclodecyl group, cycloundecyl group, cyclododecyl group, methylcyclohexyl group, ethylcyclohexyl group, propylcyclohexyl group, butylcyclohexyl group, pentylcyclohexyl group or hexylcyclohexyl group.

The pentaerythritol esters [I] are esters of pentaerythritol, dipentaerythritol or tripentaerythritol and a monocarboxylic acid, and are ordinarily obtained by the reaction of pentaerythritol,dipentaerythritol, tripentaerythritol or a mixture thereof with a mixture of at least one carboxylic acid having the aforementioned alkyl group.

Secondly, the polyol esters [II] will be explained in detail. In the formula (2), $R^5$-$R^7$ may be identical with, or different from, each other and are each a group selected from the group consisting of straight-chain alkyl groups having 3-11 carbon atoms, preferably 3-7 carbon atoms, branched-chain alkyl groups having 3-15 carbon atoms, preferably 4-11 carbon atoms and cycloalkyl groups having 6-12 carbon atoms, preferably 6-8 carbon atoms. The cycloalkyl groups in this invention may include alkylcycloalkyl groups. With respect to the above $R^5$-$R^7$, a ratio of the straight-chain alkyl groups to the total alkyl groups (including cycloalkyl groups) is not more than 60%, preferably not more than 50%. In addition, $R^8$ is a group selected from the group consisting of methyl group, ethyl group and propyl group. Further, b is an integer of 1-3. Thus, the formula (2) illustrates trimethylolethane esters, trimethylolpropane esters, trimethylolbutane esters and dimers-trimers thereof.

$R^5$-$R^7$ are each exemplified by n-propyl group, n-butyl group, n-pentyl group, n-hexyl group, n-heptyl group, n-octyl group, n-nonyl group, n-decyl group, n-undecyl group, iso-propyl group, iso-butyl group, iso-pentyl group, iso-hexyl group, iso-heptyl group, iso-octyl group, iso-nonyl group, iso-decyl group, iso-undecyl group, iso-dodecyl group, iso-tridecyl group, iso-tetradecyl group, iso-pentadecyl group, cyclohexyl group, cycloheptyl group, cyclooctyl group, cyclononyl group, cyclodecyl group, cycloundecyl group, cyclododecyl group, methylcyclohexyl group, ethylcyclohexyl group, propylcyclohexyl group, butylcyclohexyl group, pentylcyclohexyl group or hexylcyclohexyl group.

The polyol esters [II] are esters of trimethylolethane, trimethylolpropane, trimethylolbutane or a dimer or trimer thereof and a monocarboxylic acid, and are ordinarily obtained by the reaction of trimethylolethane, trimethylolpropane, trimethylolbutane, a dimer or trimer thereof or a mixture thereof with a mixture of at least one carboxylic acid having the aforementioned alkyl group.

Thirdly, the esters [III] will be explained in detail. In the formula (3), $X^1$ is a group represented by the general formula $-OR^{11}$ or

$$-O-R^{12}-O-\underset{\underset{O}{\|}}{C}-R^{13}$$

and $X^2$ is a group represented by the general formula

$$-\underset{\underset{O}{\|}}{C}-R^{14}$$

or

$$-\underset{\underset{O}{\|}}{C}-\!\!\left(R^{15}\right)_{e}\underset{\underset{O}{\|}}{C}-OR^{16}.$$

In addition, $R^9$ and $R^{15}$ are each a divalent hydrocarbon group having 1-8 carbon atoms, preferably 1-6 carbon atoms, $R^{10}$ and $R^{12}$ are each a divalent saturated hydrocarbon group having 2-16 carbon atoms, preferably 2-9 carbon atoms, $R^{11}$ and $R^{16}$ are each an alkyl group having 1-15 carbon atoms, preferably 1-12 carbon atoms, and $R^{13}$ and $R^{14}$ are each an alkyl group having 1-14 carbon atoms, preferably 1-11 carbon atoms. Further, c and e are each an integer of 0 or 1 and d is an integer of 0-30, preferably 1-30.

$R^9$ and $R^{15}$ are each exemplified by a methylene group, ethylene group, propylene group, trimethylene group, butylene group, tetramethylene group, pentamethylene group, hexamethylene group, heptamethylene group, octamethylene group, phenylene group, other unsaturated hydrocarbon groups or the like. $R^{10}$ and $R^{12}$ are each illustrated by nonamethylene group, decamethylene group, undecamethylene group, dodecamethylene group, tridecamethylene group, tetradecamethylene group, pentadecamethylene group, hexadecamethylene group, cyclohexylene group or the like in addition to the above alkylene groups (except for methylene group). $R^{13}$ and $R^{14}$ are each concretely exemplified by straight- or branched-chain alkyl groups, such as methyl group, ethyl group, propyl group, butyl group, pentyl group, hexyl group, heptyl group, octyl group, nonyl group, decyl group, undecyl group, dodecyl group, tridecyl group or tetradecyl group. $R^{11}$ and $R^{16}$ are each illustrated by a straight- or branched-chain alkyl group, such as a pentadecyl group, in addition to any one of the above alkyl groups.

A method for producing the esters [III] is not particularly limited. For example, a mixture of the esters [III] can be produced at one time by the esterification reaction of (i) a diol having none of ether linkages in the branched-chains thereof with (ii) a dicarboxylic acid and (iii) a monocarboxylic acid and/or (iv) a monohydric alcohol. The esters [III] are also produced by the reaction of the diol (i) with the monocarboxylic acid (iii) or the reaction of the dicarboxylic acid (ii) with the monohydric alcohol (iii).

The diols (i) used herein are those having 2-16 carbon atoms and are exemplified by alkylene glycols such as ethylene glycol, propylene glycol, butylene glycol, trimethylene glycol, tetramethylene glycol, pentamethylene glycol, hexamethylene glycol, heptamethylene glycol, octamethylene glycol, nonamethylene glycol, decamethylene glycol, neopentyl glycol, 2-ethyl-2-methyl-1,3-propanediol, 2-methyl-2-propyl-1,3-propanediol, 2,2-dimethyl-1,3-propanediol, 2-butyl-2-ethyl-1,3-propanediol, 3-methyl-1,5-pentanediol, 2,4-pentanediol, 2-methyl-2,4-pentanediol, 2-methyl-1,6-hexane, 1,4-cyclohexane dimethanol and 2,2-bis (4-hydroxycyclohexyl) propane.

The dicarboxylic acids (ii) used herein are those having 2-10 carbon atoms and are exemplified by saturated aliphatic dicarboxylic acids such as oxalic acid, malonic acid, succinic acid, glutaric acid, adipic acid, pimelic acid, suberic acid, azelaic acid, sebacic acid, methylmalonic acid, ethylmalonic acid, dimethylmalonic acid, methylsuccinic acid, 2,2-dimethylsuccinic acid, 2,3-dimethylsuccinic acid, 2-ethyl-2-methylsuccinic acid, 2-methylglutaric acid, 3-methylglutaric acid, 3,3-dimethylglutaric acid and 3-methyladipic acid; unsaturated aliphatic dicarboxylic acids such as maleic acid, fumaric acid, itaconic acid, citraconic acid and mesaconic acid; and aromatic dicarboxylic acids such as phthalic acid, isophthalic acid and terephthalic acid.

The monocarboxylic acids (iii) used herein are those having 2-15 carbon atoms and are exemplified by acetic acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, 3-methylbutanoic acid, 2-methylbutanoic acid, 2-ethylhexanoic acid, 2,4-dimethylpentanoic acid, 3,3,5-trimethylhexanoic acid and benzoic acid.

The monohydric alcohols (iv) used herein are those having 1-15 carbon atoms and are exemplified by methanol, ethanol, propanol, butanol, pentanol, hexanol, heptanol, octanol, nonanol, decanol, unedecanol, dodecanol, tridecanol, tetradecanol, pentadecanol, isopropanol, isobutanol, 2-methyl-1-butanol, 2,2-dimethyl-1-propanol, 3,3-dimethyl-1-butanol, 2-methyl-1-pentanol, 3-methyl-1-pentanol, 2,4,4-trimethyl-1-pentanol, 2,2,4-trimethyl-1-pentanol, 2-ethyl-4-methyl-1-pentanol and 2-ethyl-1-hexanol.

The molecular weight of the ester [III] is not particularly limited, but the number average molecular weight of the ester [III] is in the range of preferably 200-3000, more preferably 300-2000, to improve the compressor in sealability

Fourthly, the polyol ester [IV] will be explained in detail.

The neopentyl type polyhydric alcohols (a) having 5-6 carbon atoms and 3-4 hydroxyl groups are illustrated by trimethylolethane, trimethylolpropane and pentaerythritol.

The monocarboxylic acids (b) preferably used herein are those having 2-15 carbon atoms and are exemplified by acetic acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid and pentadecanoic acid.

These carboxylic acids may be either straight-chain or branched-chain ones, but it is preferable to use the latter having a branched-chain structure in an amount of not less than 50 mol%, more preferably not less than 60 mol%.

The dicarboxylic acids (c) used herein are those having 2-10 carbon atoms and are exemplified by saturated aliphatic dicarboxylic acids such as oxalic acid, malonic acid, succinic acid, glutaric acid, adipic acid, pimelic acid, suberic acid, azelaic acid, sebacic acid, methylmalonic acid, ethylmalonic acid, dimethylmalonic acid, methylsuccinic acid, 2,2-dimethylsuccinic acid, 2,3-dimethylsuccinic acid, 2-ethyl-2-methylsuccinic acid, 2-methylglutaric acid, 3-methylglutaric acid and 3-methyladipic acid; unsaturated aliphatic dicarboxylic acids such as maleic acid, fumaric acid, itaconic acid, citraconic acid and mesaconic acid; and aromatic dicarboxylic acids such as phthalic acid, terephthalic acid and isophthalic acid.

The esters [IV] are produced by the esterification reaction of the aforesaid component (a) with the component (b) and the component (c) under ordinary esterification conditions, for example, in the presence of an acid catalyst such as sulfuric acid and at an temperature of 100-180°C.

The chemical structure of the ester [IV] according to the present invention is illustrated by the following general formula (6)

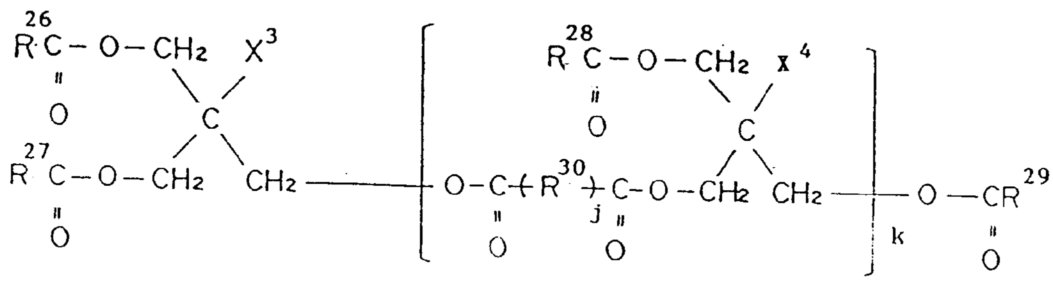

(6)

wherein $X^3$ and $X^4$ may be identical with, or different from, each other and are each an alkyl group having 1-4 carbon atoms or a group represented by the general formula

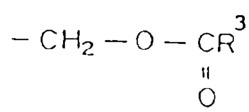

;

$R^{26}$-$R^{29}$ and $R^{31}$ may be identical with, or different from each other and are each an alkyl group having 4-15 carbon atoms; $R^{30}$ is an alkylene group having 1-8 carbon atoms; j is an integer of 0 or 1; and k is an integer of 1-5.

The molecular weight of the polyol ester [IV] is not particularly limited, but the number average molecular weight of the ester [IV] is in the range of preferably 200-3000, more preferably 300-2000, to improve the compressor in sealability.

The products obtained by the methods as mentioned above may be refined to remove the by-products and/or unreacted reactants, but the by-products and/or unreacted reactants may be present in small amounts in the refrigerator oils of the present invention as far as they do not impair the excellent performances thereof.

In the preparation of the refrigerator oils of the present invention, the esters [I]-[IV] mentioned above may be used singly, or jointly as a mixture of at least two kinds of the esters.

The kinematic viscosities of the esters according to the present invention are in the range of preferably 2-150 cSt, more preferably 5-100 cSt at 100°C.

The refrigerator oil of the present invention may comprise as the only base oil at least one member selected from the above esters [I]-[IV] and, as required, it may additionally comprise other base oils for refrigerator oils. Among the other base oils, preferable ones are illustrated as follows:

a polyoxyalkylene glycol or an ether thereof represented by the general formula (4)

$$R^{17}-(OR^{19})_f-OR^{18} \qquad (4)$$

wherein $R^{17}$ and $R^{18}$ are each a hydrogen atom or an alkyl group having 1-18 carbon atoms, $R^{19}$ is an alkylene group having 2-4 carbon atoms and f is an integer of 5-70, and

a polyoxyalkylene glycol glycerol ether represented by the general formula (5)

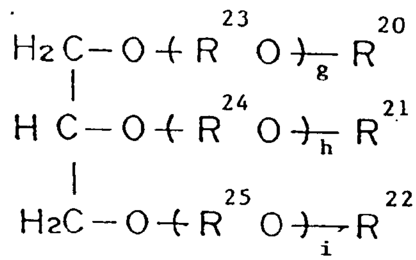

(5)

wherein $R^{20}$-$R^{22}$ are each a hydrogen atom or an alkyl group having 1-18 carbon atoms, $R^{23}$-$R^{25}$ are each an alkylene group having 2-4 carbon atoms and g-i are each an integer of 5-7.

These conventional oils represented by the formulae (4) and (5) may be used singly or jointly for adding to the refrigerator oil of this invention. Further, the refrigerator oil of this invention may be incorporated with paraffinic mineral oils, naphthenic mineral oils, polyα-olefins, alkylbenzenes and the like, but, in this case, the resulting mixed oil will be lowered in compatibility with hydrogen-containing halogonocarbons.

The amount of these conventional base oils so incorporated is not particularly limited as far as the excellent performances of the refrigerator oil of this invention are not impaired, but the esters [I]-[IV] should be present in the resulting mixed oil in a ratio of usually more than 50 % by weight, preferably not less than 70 % by weight of the total amount of the mixed oil.

The refrigerator oil composition according to this invention may be incorporated further with at least one kind of a phosphorous compound selected from the group consisting of phosphoric esters, acid phosphoric esters, amine salts of acid phosphoric esters, chlorinated phosphoric esters and phosphorous esters, to improve the oil composition in wear resistance and load resistance. These phosphorous compounds are esters of phosphoric acid or phosphorous acid and an alkanol or a polyether type alcohol, or derivatives of the esters. The phosphoric esters are exemplified by tributyl phosphate, triphenyl phosphate and tricresyl phosphate. The acid phosphoric esters are exemplified by ditetradecyl acid phosphate, dipentadecyl acid phosphate, dihexadecyl acid phosphate, diheptadecyl acid phosphate and dioctadecyl acid phosphate. The amine salts of acid phosphoric esters are exemplified by salts of the above acid phosphoric esters and amines such as methylamine, ethylamine, propylamine, butylamine, pentylamine, hexylamine, heptylamine, octylamine, dimethylamine, diethylamine, dipropylamine, dibutylamine, dipentylamine, dihexylamine, diheptylamine, dioctylamine, trimethylamine, triethylamine, tripropylamine, tributylamine, tripentylamine, trihexylamine, triheptylamine and trioctylamine. The chlorinated phosphoric esters are exemplified by tris-dichloropropyl phosphate, tris chloroethyl phosphate, polyoxyalkylene·bis[di(chloroalkyl)] phosphate and tris·chlorophenyl phosphate. The phosphorous esters are exemplified by dibutyl phosphite, tributyl phosphite, dipentyl phosphite, tripentyl phosphite, dihexyl phosphite, trihexyl phosphite, diheptyl phosphite, triheptyl phosphite, dioctyl phosphite, trioctyl phosphite, dinonyl phosphite, didecyl phosphite, diundecyl phosphite, triundecyl phosphite, didodecyl phosphite, tridodecyl phosphite, diphenyl phosphite, triphenyl phosphite, dicresyl phosphite, tricresyl phosphite and mixtures thereof. These phosphorous compounds may be added to the refrigerator oil in a ratio of 0.1-5.0 % by weight, preferably 0.2-2.0 % by weight, of the total amount of the refrigerator oil.

To further improve the refrigerator oil of the present invention in stability, it is incorporated with at least one kind of an epoxy compound selected from the group consisting of phenylglycidyl ether type epoxy compounds, glycidyl ester type epoxy compounds, epoxidized fatty acid monoesters and epoxidized vegetable oils. The said phenylglycidyl ether type epoxy compounds used herein include phenylglycidyl ether and alkylphenylglycidyl ethers. The said alkylphenylglycidyl ethers are those having 1 to 3 alkyl groups having 1 to 13 carbon atoms, among which are preferred those having an alkyl group having 4 to 10 carbon atoms, such as butylphenylglycidyl ether, pentylphenylglycidyl ether, hexylphenylglycidyl ether, heptylphenylglycidyl ether, octylphenylglycidyl ether, nonylphenylglycidyl ether and decylphenylglycidyl ether. The said glycidyl ester type epoxy compounds include phenylglycidyl esters, alkylglycidyl esters and alkenylglycidyl esters with glycidyl benzoate, glycidyl acrylate, glycidyl methacrylate and the like being preferred.

The epoxidized fatty acid monoesters include esters of an epoxidized fatty acid having 12 to 20 carbon atoms and an alcohol having 1 to 8 carbon atoms, phenol or an alkylphenol. In particular, butyl, hexyl, benzyl, cyclohexyl, methoxyethyl, octyl, phenyl or butylphenyl esters of epoxidized stearic acid may preferably be used.

The epoxidized vegetable oils include epoxidized compounds of vegetable oils such as soybean oil, linseed oil and cottonseed oil.

Among these epoxy compounds, the preferable ones include phenylglycidyl ether type epoxy compounds and epoxidized fatty acid monoesters with the former being more preferable. The most preferred are phenylglycidyl ether, butylphenylglycidyl ether and mixtures thereof.

In a case where these epoxy compounds are to be incorporated in the refrigerator oil of the present invention, it is desirable that they be incorporated therein in a ratio of 0.1-5.0 % by weight, preferably 0.2-2.0 % by weight, of the total amount of the refrigerator oil.

Of course, both of the aforementioned phosphorus compounds and epoxy compounds may be used jointly.

To further enhance the refrigerator oil of this invention in performances, the refrigerator oil may be incorporated, as required, with heretofore known additives for a refrigerator oil, which include phenol-type antioxidants such as di-tert.-butyl-p-cresol and bisphenol A; amine-type antioxidants such as phenyl-α-naphthylamine and N,N-di(2-naphthyl)-p-phenylenediamine; wear resistant additives such as zinc dithiophosphate; extreme pressure agents such as chlorinated paraffin and sulfur compounds; oiliness improvers such as fatty acids; antifoaming agents such as silicone-type ones; and metal inactivators such as benzotriazole. These additives may be used singly or jointly. The total amount of these additives added is ordinarily not more than 10 % by weight, preferably not more than 5 % by weight, of the total amount of the refrigerator oil.

The refrigerator oils of this invention comprising at least one of the esters [I]-[IV] as the base oil should have such viscosity and pour point as those which are normally suitable for an ordinary refrigerator oil, but they should desirably have a pour point of not higher than -10°C, preferably -20°C to -80°C, to prevent them from solidification at a low temperature. Further, they should desirably have a kinematic viscosity of not less than 2cSt, preferably not less than 3cSt at 100°C, to keep the sealability of the compressor when used, while they should desirably have a kinematic viscosity of not more than 150cSt, preferably not more than 100cSt at 100°C, in veiw of their fluidity at a low temperature and the efficiency of heat exchange in the evaporator when used.

The refrigerants which may be used in refrigerators in which the lubricating oils (refrigerator oils) of the present invention are suitably used, include hydrogen-containing halogenocarbons such as trifluoromethane (HFC-23), pentafluoroethane (HFC-125), 1,1,2,2-tetrafluoroethane (HFC-134), 1,1,1,2-tetrafluoroethane (HFC-134a), 1,1-difluoroethane (HFC-152a), monochlorodifluoromethane (HCFC-22), 1-chloro-1,1-difluoroethane (HCFC-142b), dichlorotrifluoroethane (HCFC-123), monochlorotetrafluoroethane (HCFC-124), and mixtures thereof. Among these hydrogen-containing halogenocarbons, the chlorine-free type halogenocarbons such as HFC-23, HFC-125, HFC-134, HFC-134a and HFC-152a, are preferable with HFC-134a being particularly preferable in view of the environmental problems.

The refrigerator oils of the present invention are very excellent in compatibility with the hydrogen-containing halogencarbons as compared with the heretofore known refrigerator oils. Further, the refrigerator oils of the present invention are excellent ones which have not only high compatibility with the hydrogen-containing halogencarbons and high electrical insulating property but also high lubricity and low hygroscopicity.

The refrigerator oils of the present invention may particularly preferably be used in refrigerators, air-conditioners, dehumidifiers, cold-storage chests, freezers, freeze and refrigeration warehouses, automatic vending machines, showcases, cooling units in chemical plants, and the like which have a reciprocating or rotary compressor. Further, the above refrigerator oils may also preferably be used in refrigerators having a centrifugal compressor.

This invention will be better understood by the following Examples and Comparative Examples.

## Examples 1-23 and Comparative Examples 1-10

Refrigerator oils of this invention and comparative refrigerator oils of a conventional type are illustrated as follows:

[Example 1] A tetraester of pentaerythritol (1 mol) and 2-ethylhexanoic acid (4 mol):

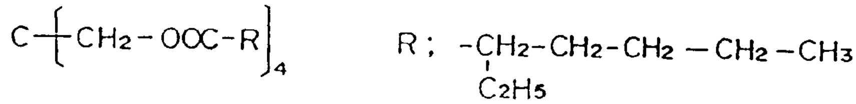

[Example 2] A tetraester of pentaerythritol (1 mol) and 3,5,5-trimethylhexanoic acid (4 mol):

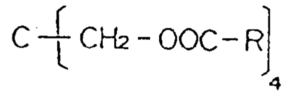

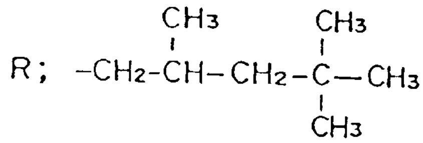

[Example 3] A tetraester of pentaerythritol (1 mol), 2-ethylhexanoic acid (2 mol) and 3,5,5-trimethylhexanoic acid (2 mol)

[Example 4] A hexaester of dipentaerythritol (1 mol), n-hexanoic acid (3 mol) and 2,4-dimethylpentanoic acid (3 mol):

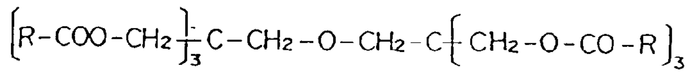

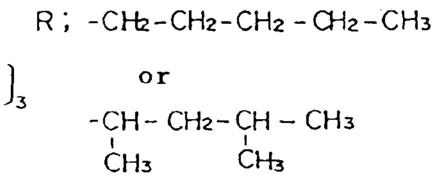

[Example 5] A hexaester of dipentaerythritol (1 mol) and 3,5,5-trimethylhexanoic acid (6 mol):

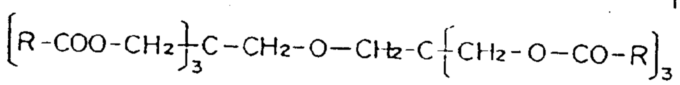

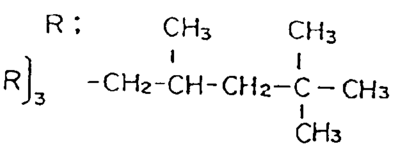

[Example 6] A mixture of 50 parts by weight of the same ester as in Example 1 and 50 parts by weight of the same ester as in Example 5

[Example 7] A mixture of 30 parts by weight of the same ester as in Example 2, 40 parts by weight of the same ester as in Example 5 and 30 parts by weight of the following octaester of tripentaerythritol (1 mol), 3-methylbutanoic acid (4 mol) and 3-methylpentanoic acid (4 mol):

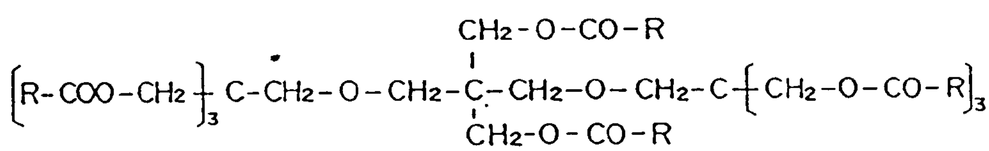

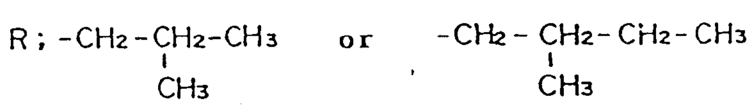

[Example 8] A triester of trimethylolpropane (1 mol) and 2-ethylhexanoic acid (3 mol):

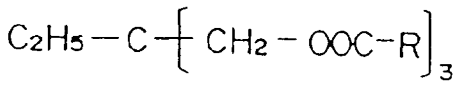

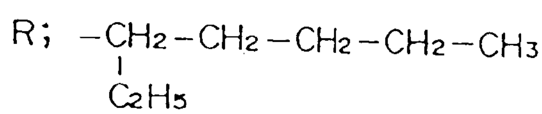

[Example 9] A triester of trimethylolpropane (1 mol) and 3,5,5-trimethylhexanoic acid (3 mol):

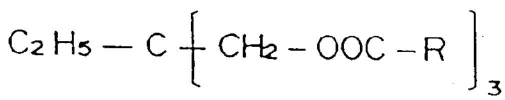

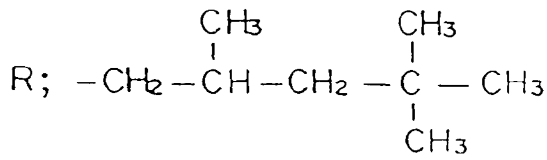

[Example 10] A triester of trimethylolpropane (1 mol), 2-ethylhexanoic acid (1.5 mol) and 3,5,5-trimethylhexanoic acid (1.5 mol)

[Example 11] A tetraester of di-(trimethylolpropane) (1 mol), n-hexanoic acid (2 mol) and 2,4-dimethylpentanoic acid (2 mol):

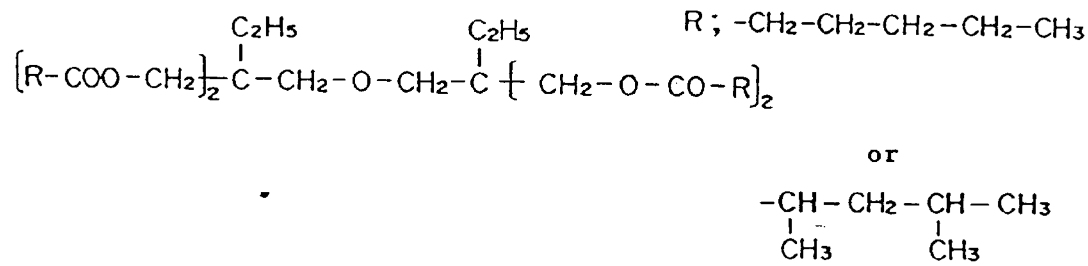

[Example 12] A tetraester of di-(trimethylolpropane) (1 mol) and 3,5,5-trimethylhexanoic acid (4 mol):

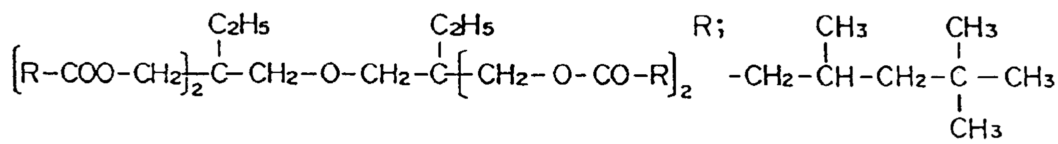

[Example 13] A mixture of 50 parts by weight of the same ester as in Example 8 and 50 parts by weight of the same ester as in Example 12

[Example 14] A mixture of 30 parts by weight of the same ester as in Example 9, 40 parts by weight of the same ester as in Example 12 and 30 parts by weight of the following octaester of tripentaerythritol (1 mol), 3-methylbutanoic acid (4 mol) and 3-methylpentanoic acid (4 mol):

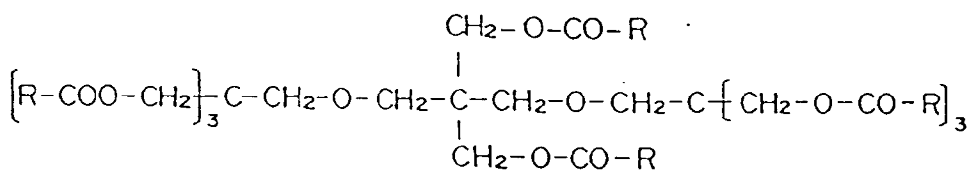

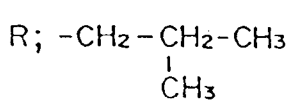

or

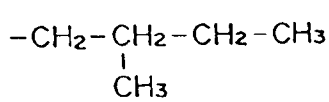

[Example 15] A diester of adipic acid and 2-ethyl-1-hexanol:

$R_1-O-CO-(CH_2)_4-COO-R_1$

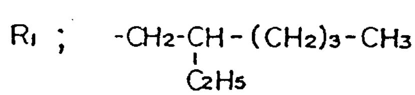

[Example 16] A diester of 3-methyl-1,5-pentanediol and 3,5,5-trimethylhexanoic acid:

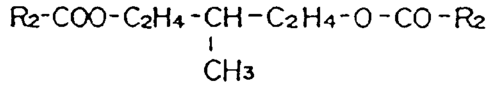

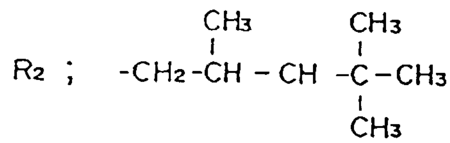

[Example 17] A complex ester having an average molecular weight of about 500 of 3-methyl-1,5-pentanediol, adipic acid and 3,5,5-trimethylhexanoic acid:

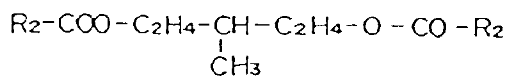

and

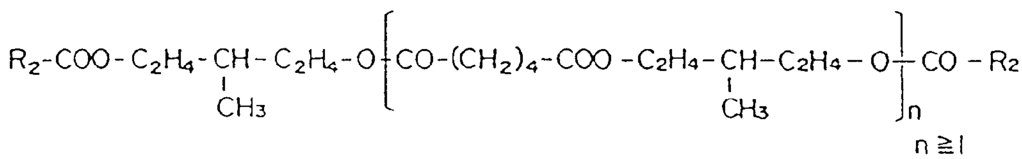

R2; the same as in Example 16

[Example 18] A complex ester having the same composition as that in Example 17 except for having an average molecular weight of about 700

[Example 19] A complex ester having an average molecular weight of about 520 of 3-methyl-1,5-pentanediol, adipic acid and 2-ethyl-1-hexanol:

$$R_I\text{-}O\text{-}CO\text{-}(CH_2)_4\text{-}COO\text{-}R_I$$

and

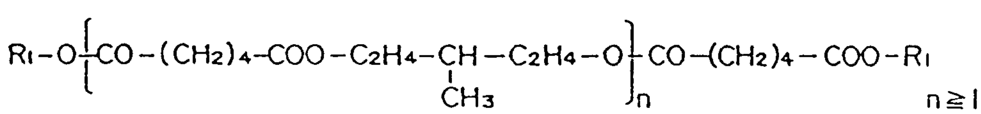

[Example 20] A complex ester having the same composition as that in Example 19 except for having an average molecular weight of about 750

[Example 21] A mixture of the same complex ester as in Example 17 and 1.0 wt.% of a phosphoic ester type wear inhibitor

[Example 22] An ester having an average molecular weight of 690 and a kinematic viscosity at 100°C of 9.6 cSt, obtained by the reaction of 2 moles of trimethylolpropane with 1 mole of succinic acid, 1 mole of glutaric acid, 2 moles of iso-pentanoic acid and 2 moles of iso-hexanoic acid

[Example 23] An ester having an average molecular weight of 880 and a kinematic viscosity at 100 °C of 12.7 cSt, obtained by the reaction of 2 moles of pentaerythritol with 1 mole of succinic acid, 1 mole of glutaric acid, 3 moles of iso-pentanoic acid and 3 moles of iso-hexanoic acid

[Comparative Example 1] A naphthenic mineral oil

[Comparative Example 2] A branched-chain type alkylbenzene (average molecular weight: about 300)

[Comparative Example 3] Polyoxypropylene glycol monobutyl ether (average molecular weight: about 500)

[Comparative Example 4] Polyoxypropylene glycol monobutyl ether (average molecular weight: about 1000)

[Comparative Example 5] Polyoxypropylene glycol (average molecular weight: about 700)

[Comparative Example 6] Polyoxypropylene glycol (average molecular weight: about 2000)

[Comparative Example 7] A tetraester of pentaerythritol (1 mol) and n-nonanoic acid (4 mol)

[Comparative Example 8] A tetraester of pentaerythritol (1 mol) and coconut oil

[Comparative Example 9] A triester of trimethylolpropane (1 mol) and n-nonanoic acid (3 mol)

[Comparative Example 10] A triester of trimethylolpropane (1 mol) and coconut oil

The base oils of Examples 1-23 for the refrigerator oils of the present invention were evaluated for their

performances that are their compatibility with HFC-134a, insulating property, wear resistance and hygroscopicity by the following respective test methods. For comparison, the mineral oil, the alkylbenzene, the polyglycols and the esters of the Comparative Examples which have heretofore been used as refrigerator oils were evaluated in the same manner as in Examples 1-23.

(Miscibility with HFC-134a)

0.2 g of the test oil of each of the Examples and the Comparative Examples and 1.8 g of the refrigerant (HFC-134a) were sealed in a glass tube having an inner diameter of 6 mm and a length of 220 mm. This glass tube was then placed in a thermostat maintained at a predetermined low temperature or high temperature to observe whether the refrigerant and the test oil were miscible with each other, separated from each other or made white-turbid.

(Insulating property)

The test oils were each measured for specific volume resistivity at 25°C in accordance with JIS C 2101.

(FALEX wear test)

The test oils were each applied to a test journal for measuring the amount of the test journal worn by having the journal run in at a test oil temperature of 100 °C under a load of 150 lb for 1 minute and then running it under a load of 250 lb for 2 hours in accordance with ASTM D 2670.

(Hygroscopicity)

Thirty grams (30 g) of each of the test oils were placed in a 300-ml beaker, allowed to stand for 7 days in an air-conditioned bath maintained at a temperature of 60 °C and a humidity of 30 % and then measured for water content by the Karl-Fischer method.

Table 1

| Example | Kinematic viscosity @ 100°C (cSt) | Miscibility with HFC-134a Miscible temperature range (°C) | Resistivity @25°C (Ω·cm) | FALEX test Amount of journal worn (mg) | Hygro-scopicity 60°C,30% (%) |
|---|---|---|---|---|---|
| Example1 | 6.2 | -27 - CT * | $4.1x10^{14}$ | 27 | 0.19 |
| Example2 | 11.5 | -32 - CT * | $3.8x10^{14}$ | 25 | 0.19 |
| Example3 | 8.1 | -28 - CT * | $4.0x10^{14}$ | 26 | 0.19 |
| Example4 | 10.0 | <-70 - CT * | $2.8x10^{14}$ | 22 | 0.17 |
| Example5 | 28.2 | - 7 - 75 | $3.0x10^{14}$ | 19 | 0.15 |
| Example6 | 11.8 | -25 - 90 | $3.2x10^{14}$ | 22 | 0.16 |
| Example7 | 32.3 | - 5 - 86 | $2.4x10^{14}$ | 18 | 0.13 |
| Example8 | 3.8 | -35 - CT * | $4.5x10^{14}$ | 29 | 0.20 |
| Example9 | 9.5 | -45 - CT * | $3.9x10^{14}$ | 26 | 0.20 |
| Example10 | 7.2 | -37 - CT * | $4.1x10^{14}$ | 26 | 0.20 |
| Example11 | 9.1 | <-70 - CT * | $2.5x10^{14}$ | 24 | 0.18 |
| Example12 | 22.1 | -11 - 75 | $2.8x10^{14}$ | 20 | 0.14 |
| Example13 | 9.8 | -20 - 0 | $3.0x10^{14}$ | 24 | 0.16 |
| Example14 | 31.9 | - 7 - 88 | $2.5x10^{14}$ | 19 | 0.14 |
| Example15 | 2.3 | -24 - CT * | $4.2x10^{14}$ | 24 | 0.22 |
| Example16 | 3.1 | -30 - CT * | $3.9x10^{14}$ | 22 | 0.20 |
| Example17 | 5.5 | -55 - CT * | $2.5x10^{14}$ | 15 | 0.18 |
| Example18 | 10.3 | -34 - 95 | $1.4x10^{14}$ | 12 | 0.11 |
| Example19 | 6.2 | -47 - CT * | $2.2x10^{14}$ | 14 | 0.16 |
| Example20 | 11.6 | -30 - 92 | $1.1x10^{14}$ | 10 | 0.10 |
| Example21 | 5.5 | -55 - CT * | $2.3x10^{14}$ | 2 | 0.18 |
| Example22 | 9.6 | <-35 - 76 | $2.8x10^{14}$ | 20 | 0.18 |
| Example23 | 12.7 | <-30 - 68 | $1.2x10^{14}$ | 17 | 0.12 |

*: CT; Critical temperature of HFC-134a (102°C)

Table 2

| Comparative Example | Kinematic viscosity @ 100°C (cSt) | Miscibility with HFC-134a Miscible temperature range (°C) | Resistivity @25°C (Ω·cm) | FALEX test Amount of journal worn (mg) | Hygroscopicity 60°C,30% (%) |
|---|---|---|---|---|---|
| Com.Ex.1 | 5.1 | Immiscible | $3.8x10^{15}$ | 23 | 0.01 |
| Com.Ex.2 | 4.8 | Immiscible | $6.4x10^{15}$ | 25 | 0.01 |
| Com.Ex.3 | 4.9 | <-70 - 97 | $1.1x10^{11}$ | 40 | 1.31 |
| Com.Ex.4 | 10.8 | <-70 - 56 | $1.2x10^{11}$ | 35 | 1.01 |
| Com.Ex.5 | 10.6 | <-70 - 64 | $5.6x10^{10}$ | 38 | 2.30 |
| Com.Ex.6 | 22.4 | -51 - 32 | $4.8x10^{10}$ | 30 | 1.81 |
| Com.Ex.7 | 6.1 | Immiscible | - | - | - |
| Com.Ex.8 | 4.9 | Immiscible | - | - | - |
| Com.Ex.9 | 5.4 | Immiscible | - | - | - |
| Com.Ex.10 | 4.4 | Immiscible | - | - | - |

It is apparent from the results indicated in Table 1 that the refrigerator oils (Examples 1-23) of the present invention are very excellent in miscibility with a refrigerant, HFC-134a, as compared with those of Comparative Examples 1-2 and 7-10.

As is apparent from the results indicated in Table 2, the esters of Comparative Examples 7 and 9 in which the alkyl groups of the acid moiety are all straight-chain ones are inferior in miscibility with the refrigerant. Further, Table 2 shows that the esters of Comparative Examples 8 and 10 which have heretofore been used as lubricating oils, refrigerator oils and the like and in which the acid moiety is originated from a natural fat or oil, are also inferior in miscibility with the refrigerant.

Table 2 further shows that the ethers of Comparative Examples 3 and 4 as well as the polyoxypropylene glycols of Comparative Examples 5 and 6 are excellent in miscibility with the refrigerant, but these ethers and glycols are inferior in insulating property thereby rendering them unusable for hermetic type compressors. Still further, Tables 1 and 2 show that the ethers and glycols of Comparative Examples 3-6 have hygroscopicity 5-10 times that of the refrigerator oils of Examples 1-23 and are also inferior in electrical insulating property, ice choke, wear resistance, stability and the like to the refrigerator oils of the Examples.

The FALEX wear test shows that the refrigerator oils of Examples 1-23 are at least equal in wear resistance to those of Comparative Examples 3-6.

(Effect of the Invention)

As is apparent from the above comparative experiments, lubricating oils for compressors of refrigerators of the present invention are suitable for use in refrigerators using therein a hydrogen-containing halogenocarbon as a refrigerant and are excellent in electrical insulating property as well as wear resistance and nonhygroscopicity.

## Claims

1. A refrigerator oil for use in compressors using therein a hydrogen-containing halogenocarbon as a refrigerant, consisting essentially of as a base oil at least one kind of an ester selected from the group consisting of:

   [I] a pentaerythritol ester represented by the general formula (1)

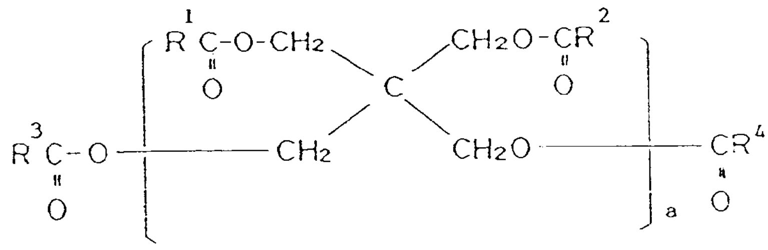

(1)

wherein $R^1$-$R^4$ may be identical with or different from each other and are each a group selected from the group consisting of straight-chain alkyl groups having 3 to 11 carbon atoms, branched-chain alkyl groups having 3 to 15 carbon atoms and cycloalkyl groups having 6 to 12 carbon atoms, the straight-chain alkyl groups being present in a ratio of not more than 60% of the total alkyl groups, and a is an integer of 1 to 3;

[II] a polyol ester represented by the general formula (2)

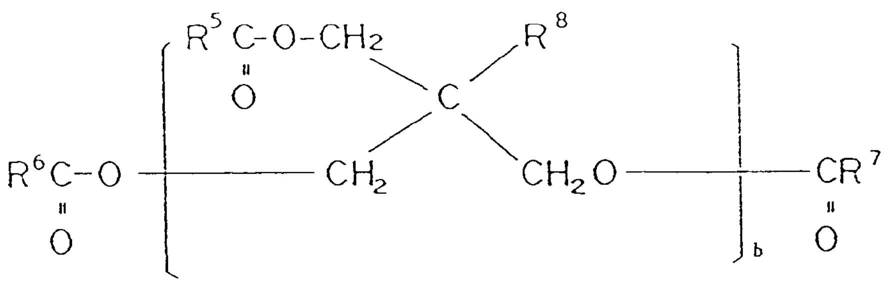

(2)

wherein $R^5$-$R^7$ may be identical with or different from each other and are each a group selected from the group consisting of straight-chain alkyl groups having 3 to 11 carbon atoms, branched-chain alkyl groups having 3 to 15 carbon atoms and cycloalkyl groups having 6 to 12 carbon atoms, the straight-chain alkyl groups being present in a ratio of not more than 60% of the total alkyl groups, $R^8$ is a group selected from the group consisting of methyl, ethyl and propyl groups, and b is an integer of 1 to 3;

[III] an ester represented by the general formula (3)

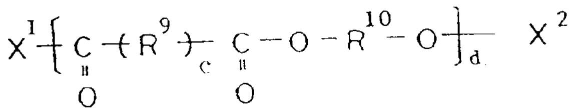

(3)

wherein $X^1$ is a group represented by the general formula $-OR^{11}$ or

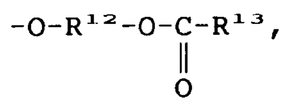

$X^2$ is a group represented by the general formula

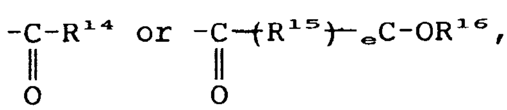

$R^9$ and $R^{15}$ are each a divalent hydrocarbon group having 1 to 8 carbon atoms, $R^{10}$ and $R^{12}$ are each a divalent saturated hydrocarbon group having 2 to 16 carbon atoms, $R^{11}$ and $R^{16}$ are each a branched-chain alkyl group having 3 to 15 carbon atoms, $R^{13}$ and $R^{14}$ are each a branched-chain alkyl group having 3 to 14 carbon atoms, c and e are each an integer of 0 or 1 and d is an integer of 0 to 30; and [IV] a polyol ester obtained by the synthesis of, as raw materials, (a) a neopentyl type polyhydric alcohol having 5 to 6 carbon atoms and 3 to 4 hydroxyl groups, (b) a straight-chain monocarboxylic acid and/or a branched-chain monocarboxylic acid, the branched-chain monocarboxylic acid being present in a ratio of not less than 50 mol% of the total monocarboxylic acids, (c) a dicarboxylic acid; and further comprising at least one kind of an epoxy compound selected from the group consisting of phenylglycidyl ether type epoxy compounds, glycidyl ester type epoxy compounds, epoxidized fatty acid monoesters and epoxidized vegetable oils, in an amount of 0.1 to 5.0% by weight based on the total amount of the refrigerator oil.

2. A refrigerator oil according to claim 1, wherein the hydrogen-containing halogenocarbon is a chlorine-free type halogenocarbon.

3. A refrigerator oil according to claim 1, further comprising at least one kind of a phosphorous compound selected from the group consisting of phosphoric esters, acid phosphoric esters, amine salts of acid phosphoric esters, chlorinated phosphoric esters and phosphorous esters, in an amount of 0.1 to 5.0% by weight based on the total amount of the refrigerator oil.

4. A refrigerator oil according to claim 1, wherein said base oil has a pour point of not higher than -10°C and a kinematic viscosity of 2 to 150 cSt at 100°C.

**Patentansprüche**

1. Kühlmaschinenöl zur Verwendung in Kompressoren, in dem ein halogenierter Kohlenwasserstoff als Kühlmittel verwendet wird, **dadurch gekennzeichnet**, daß das es im wesentlichen aus mindestens einem Ester als Basisöl, ausgewählt aus der Gruppe, bestehend aus:

[I] einem Pentaerythritester der allgemeinen Formel (1)

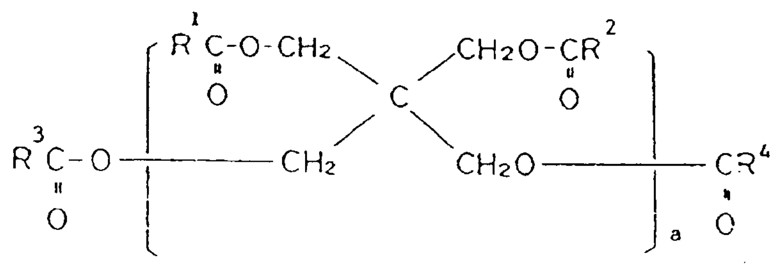

(1)

worin $R^1$-$R^4$ gleich oder verschieden voneinander sein können und jeweils eine Gruppe, ausgewählt aus der Gruppe, bestehend aus geradkettigen Alkylgruppen mit 3 bis 11 Kohlenstoffatomen, verzweigtkettigen Alkylgruppen mit 3 bis 15 Kohlenstoffatomen und Cycloalkylgruppen mit 6 bis 12 Kohlenstoffatomen, sind, wobei die geradkettigen Alkylgruppen in einem Verhältnis von nicht mehr als 60 % der gesamten Alkylgruppen vorhanden sind, und a eine ganze Zahl von 1 bis 3 ist;

[II] einem Polyolester der allgemeinen Formel (2)

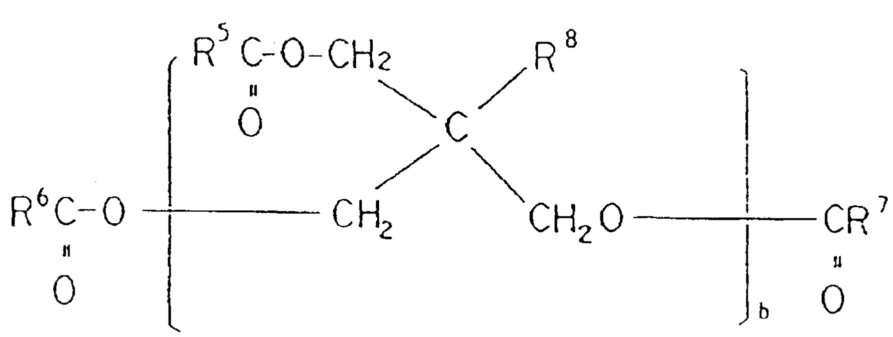

(2)

worin $R^5$-$R^7$ gleich oder verschieden voneinander sein können und jeweils eine Gruppe, ausgewählt aus der Gruppe, bestehend aus geradkettigen Alkylgruppen mit 3 bis 11 Kohlenstof fatomen, verzweigtkettigen Alkylgruppen mit 3 bis 15 Kohlenstoffatomen und Cycloalkylgruppen mit 6 bis 12 Kohlenstoffatomen, sind, wobei die geradkettigen Alkylgruppen in einem Verhältnis von nicht mehr als 60 % der gesamten Alkylgruppen vorhanden sind, $R^8$ eine Gruppe, ausgewählt aus der Gruppe, bestehend aus Methyl-, Ethyl- und Propylgruppen ist, und b eine ganze Zahl von 1 bis 3 ist;
[III] einem Ester der allgemeinen Formel (3)

$$X^1 \left[ \underset{\underset{O}{\|}}{C} - (R^9)_c - \underset{\underset{O}{\|}}{C} - O - R^{10} - O \right]_d X \qquad (3)$$

worin $X^1$ eine Gruppe der allgemeinen Formel $-OR^{11}$ oder

$$-O-R^{12}-O-\underset{\underset{O}{\|}}{C}-R^{13}$$

ist, $X^2$ eine Gruppe der allgemeinen Formel

$$-\underset{\underset{O}{\|}}{C}-R^{14} \quad \text{oder} \quad -\underset{\underset{O}{\|}}{C}-(R^{15})-_e C-OR^{16}$$

ist, $R^9$ und $R^{15}$ jeweils eine zweiwertige Kohlenwasserstoffgruppe mit 1 bis 8 Kohlenstoffatomen sind, $R^{10}$ und $R^{12}$ jeweils eine zweiwertige gesättigte Kohlenwasserstoffgruppe mit 2 bis 16 Kohlenstoffatomen sind, $R^{11}$ und $R^{16}$ jeweils eine verzweigtkettige Alkylgruppe mit 3 bis 15 Kohlenstoffatomen sind, $R^{13}$ und $R^{14}$ jeweils eine verzweigtkettige Alkylgruppe mit 3 bis 14 Kohlenstoffatomen sind, c und e jeweils eine ganze Zahl von 0 oder 1 sind, und d eine ganze Zahl von 0 bis 30 ist; und
[IV] einem Polyolester, erhalten durch die Synthese von (a) einem mehrwertigen Neopentyl-Alkohol mit 5 bis 6 Kohlenstoffatomen und 3 bis 4 Hydroxylgruppen, (b) einer geradkettigen Monocarbonsäure und/oder einer verzweigtkettigen Monocarbonsäure, wobei die verzweigtkettige Monocarbonsäure in einem Verhältnis von nicht weniger als 50 Mol% der gesamten Monocarbonsäuren vorhanden ist, (c) einer Dicarbonsäure als Ausgangsmaterialien; und daß es weiterhin mindestens eine Epoxyverbindung, ausgewählt aus der Gruppe, bestehend aus Epoxyverbindungen vom Phenylglycidylether-Typ, Epoxyverbindungen vom Glycidylester-Typ, epoxidierten Fettsäuremono- estern und epoxidierten Pflanzenölen in einer Menge von 0,1 bis 5,0 Gew.-%, bezogen auf die Gesamtmenge des Kühlmaschi- nenöls, enthält.

2. Kühlmaschinenöl nach Anspruch 1, **dadurch gekennzeichnet**, daß der halogenierte Kohlenwasserstoff ein Kohlenwasserstoff vom chlorfreien Typ ist.

3. Kühlmaschinenöl nach Anspruch 1, **dadurch gekennzeichnet**, daß es weiterhin mindestens eine Art einer Phosphorverbindung, ausgewählt aus der Gruppe, bestehend aus Phosphorsäureestern, sauren Phosphorsäureestern, Aminsalzen von Phosphorsäureestern , chlorierten Phosphorsäureestern und Estern der phosphorigen Säure, in einer Menge von 0,1 bis 5,0 Gew.-%, bezogen auf die Gesamtmenge des Kühlmaschinenöls, enthält.

4. Kühlmaschinenöl nach Anspruch 1, **dadurch gekennzeichnet**, daß das Basisöl einen Stockpunkt von nicht höher als -10°C und eine kinematische Viskosität von 2 bis 150 cSt bei 100°C besitzt.

## Revendications

1. Huile pour réfrigérateur à utiliser dans des compresseurs qui y emploient un halogénocarbone contenant de l'hydrogène comme réfrigérant, se composant essentiellement comme huile de base, d'au moins une espèce d'ester sélectionné parmi le groupe constitué par :

[I] un ester pentaérythritol représenté par la formule générale (1)

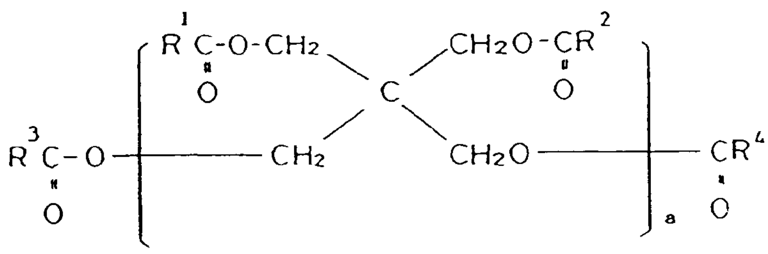

(1)

dans lequel $R^1$ à $R^4$ peuvent être identiques ou différents les uns des autres et représentent chacun un groupement sélectionné parmi le groupe constitué par les groupements alkyle à chaîne linéaire ayant 3 à 11 atomes de carbone, les groupements alkyle à chaîne ramifiée ayant 3 à 15 atomes de carbone et les groupements cycloalkyle ayant 6 à 12 atomes de carbone, les groupements alkyle à chaîne linéaire étant présents dans une proportion de 60% au plus des groupements alkyle totaux, et a est un entier de 1 à 3 ;

[II] un ester polyol représenté par la formule générale (2)

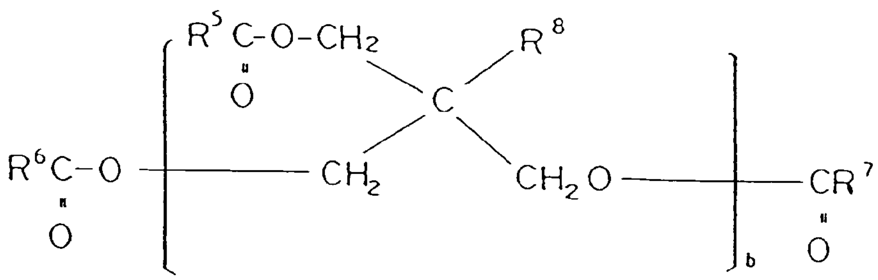

(2)

dans lequel $R^5$ à $R^7$ peuvent être identiques ou différents les uns des autres et représentent chacun un groupement sélectionné parmi le groupe constitué par les groupements alkyle à chaîne linéaire ayant 3 à 11 atomes de carbone, les groupements alkyle à chaîne ramifiée ayant 3 à 15 atomes de carbone et les groupements cycloalkyle ayant 6 à 12 atomes de carbone, les groupements alkyle à chaîne linéaire étant présents dans une proportion de 60% au plus des groupements alkyle totaux, $R^8$ est un groupement sélectionné parmi le groupe constitué par les groupements méthyle, éthyle et propyle, et b est un entier de 1 à 3 ;

[III] un ester représenté par la formule générale (3)

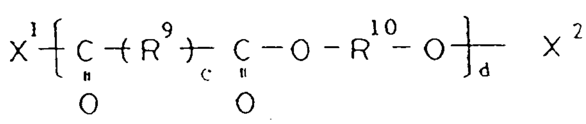

(3)

dans lequel $X^1$ est un groupement représenté par la formule générale $-OR^{11}$ ou

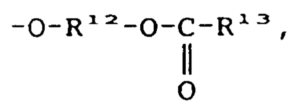

$X^2$ est un groupement représenté par la formule générale

$$-\underset{\underset{O}{\|}}{C}-R^{14} \quad \text{ou} \quad -\underset{\underset{O}{\|}}{C}-\!\left(R^{15}\right)_{e}\!-C-OR^{16},$$

$R^9$ et $R^{15}$ représentent chacun un groupement hydrocarbure divalent ayant 1 à 8 atomes de carbone, $R^{10}$ et $R^{12}$ représentent chacun un groupement hydrocarbure saturé divalent ayant 2 à 16 atomes de carbone, $R^{11}$ et $R^{16}$ représentent chacun un groupement alkyle à chaîne ramifiée ayant 3 à 15 atomes de carbone, $R^{13}$ et $R^{14}$ représentent chacun un groupement alkyle à chaîne ramifiée ayant 3 à 14 atomes de carbone, c et e représentent chacun l'entier 0 ou 1, et d un entier de 0 à 30 ; et

[IV] un ester polyol obtenu par la synthèse de, comme matières premières, (a) un alcool polyhydrique de type néopentyle possédant 5 à 6 atomes de carbone et 3 à 4 groupements hydroxyle, (b) un acide monocarboxylique à chaîne linéaire et/ou un acide monocarboxylique à chaîne ramifiée, l'acide monocarboxylique à chaîne ramifiée étant présent dans une proportion d'au moins 50% mol des acides monocarboxyliques totaux, (c) un acide dicarboxylique ; et comportant en plus, au moins une espèce d'un composé époxy sélectionné parmi le groupe constitué par les composés époxy de type éther phénylglycidylique, les composés époxy de type ester glycidyle, les monoesters d'acide gras époxydés et les huiles végétales époxidées, en quantité de 0,1 à 5,0% en poids par rapport à la quantité totale d'huile pour réfrigérateur.

2. Huile pour réfrigérateur selon la revendication 1, dans laquelle l'halogénocabone contenant de l'hydrogène, est un halogénocarbone dépourvu de chlore.

3. Huile pour réfrigérateur selon la revendication 1, comportant en plus, au moins une espèce de composé phosphoreux sélectionné parmi le groupe constitué par les esters phosphoriques, les esters d'acide phosphorique, les sels d'amine des esters d'acide phosphorique, les esters phosphoriques chlorés et les esters phosphoreux, en quantité de 0,1 à 5,0% en poids par rapport à la quantité totale d'huile pour réfrigérateur.

4. Huile pour réfrigérateur selon la revendication 1, dans laquelle ladite huile de base a une température de congélation inférieure à -10°C et une viscosité cinématique de 2 à 150 cSt à 100°C.